# EUROPÄISCHE PATENTSCHRIFT

(11) **EP 0 721 372 B1**
(45) Veröffentlichungstag und Bekanntmachung des Hinweises auf die Patenterteilung: **03.09.1997**
(21) Anmeldenummer: 94928794.0
(22) Anmeldetag: 21.09.1994
(51) Int. Cl.: B01J 20/32, G01N 30/48, B01J 39/12

(54) **NUKLEOSIDHALTIGES SORBENS FÜR DIE AFFINITÄTSCHROMATOGRAPHIE**
NUCLEOSIDE-CONTAINING SORBENT FOR AFFINITY CHROMATOGRAPHY
SORBANT CONTENANT DES NUCLEOSIDES UTILISE EN CHROMATOGRAPHIE PAR AFFINITE

(30) Priorität: 02.10.1993 DE 4333674
(43) Veröffentlichungstag der Anmeldung: 17.07.1996
(73) Patentinhaber: MERCK PATENT GmbH, 64293 Darmstadt (DE)
(72) Erfinder: MÜLLER, Egbert, D-64390 Erzhausen (DE); HEMBERGER, Jürgen, D-63741 Aschaffenburg (DE); MORR, Michael, D-38302 Wolfenbüttel (DE)
(86) Internationale Anmeldenummer: EP9403157
(87) Internationale Veröffentlichungsnummer: WO9509694

(56) Entgegenhaltungen:
- EP-A- 0 346 865
- EP-A- 0 356 838
- WO-A-93/13220
- DE-A- 2 337 312
- FR-A- 2 440 956
- PATENT ABSTRACTS OF JAPAN vol. 6, no. 159 (P-136) 20. August 1982 & JP,A,57 077 958 (MITSUBISHI) 15. Mai 1982
- DATABASE WPI Week 9343, Derwent Publications Ltd., London, GB; AN 93-339774 & JP,A,5 247 123 (HITACHI) 24. September 1993

## Beschreibung

Die Erfindung betrifft Sorbenzien für die Affinitätschromatographie, die Nukleoside oder Nukleotide als Affinitätsliganden enthalten, sowie phosphorsäurehaltige Zwischenverbindungen für ihre Herstellung und deren Verwendung.

Für biologische Wechselwirkungen, z.B. die Mechanismen der Zellerkennung, spielen Glycoproteine, die häufig Sialinsäure enthalten, eine wichtige Rolle. Deren Oligosaccharidbestandteile besitzen häufig komplexe Strukturen. Deswegen sind organisch-chemische in-vitro Synthesen solcher Oligosaccharide, beispielsweise wegen der Einführung und Abspaltung von Schutzgruppen, äußerst aufwendig. Ähnlich aufwendig ist normalerweise die Isolierung aus Naturstoffen. Deswegen werden bei in-vitro Synthesen organisch-chemische Syntheseschritte mit biochemischen Syntheseschritten kombiniert. Bei den biochemischen Syntheseschritten wird die Fähigkeit von Enzymen ausgenutzt, in spezifischer Weise bestimmte chemische Strukturen zu erzeugen, ohne daß Schutzgruppen eingeführt werden müssen. Für derartige Reaktionen werden verschiedene Enzyme aus der Gruppe der Glykosyltransferasen benötigt. Sialinsäurereste lassen sich beispielsweise durch Verwendung von Sialintransferasen an Mono- oder Oligosaccharide binden.

Die Isolierung der Glykosyltransferasen, z.B. Sialin-, Glucosyl-, Acetylglucosamin-, Galactosyl-, Galactosamin-, Mannosyl- oder Fucosyltransferase, erfolgt am besten mit Hilfe der Affinitätschromatographie, wobei bevorzugt immobilisierte Nukleosiddiphosphate, Nukleoside, Mono- oder Oligonukleotide als Affinitätsligand dienen. Für die Sialintransferase wird Cytidindiphosphat (CDP) als Affinitätsligand bevorzugt.

Nukleosidhaltige Affininitätsliganden sind auch zur Anreicherung anderer Enzyme, beispielsweise von Dehydrogenasen, Oxidasen, Kinasen oder Transaminasen geeignet.

Im Stand der Technik bekannte Sorbenzien für die Affinitätschromatographie enthalten als Basisträger Polysaccharide, beispielsweise Agarose, an die CDP über einen Aminohexylrest als Spacer gebunden ist. Dieser Spacer ist für die Wechselwirkung zwischen Affinitätsligand und Enzym notwendig. Wegen der Hydrophobizität des Spacers kommt es jedoch zu unerwünschten Wechselwirkungen, wodurch die Ausbeute an Enzym und seine Aktivität verringert werden. Es besteht also die Aufgabe, verbesserte nukleosidhaltige Affinitätsträger für die Reinigung von Enzymen, beispielsweise von Glykosyltransferasen bereitzustellen.

Aus der Anmeldung DE 43 10 964 sind oxiranhaltige aktivierte Trägermaterialien bekannt, bei denen Monomere der Formel I auf einen hydroxylgruppenhaltigen Basisträger aufgepfropft sind, 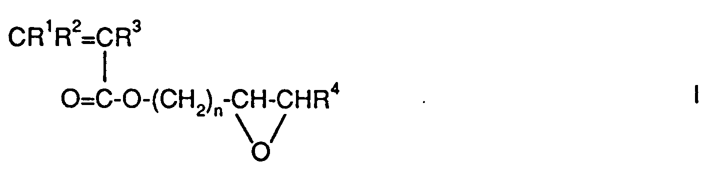 worin
- R¹, R² und R³: unabhängig voneinander H oder CH₃,
- R⁴: H, C₁-C₅-Alkyl oder C₆-C₁₂-Aryl
und
- n: eine ganze Zahl zwischen 1 und 5
bedeuten. Es wurde gefunden, daß sich aus diesen aktivierten Trägermaterialien durch Kombination von an sich bekannten Einzelschritten Trennmaterialien für die Affinitätschromatographie herstellen lassen. Die resultierenden Trennmaterialien weisen verbesserte Eigenschaften auf.

Gegenstand der Erfindung sind Trennmaterialien für die Affinitätschromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalentgebundenen Polymeren über eine endständige Monomereinheit an den Basisträger gebunden sind,
c) die linearen Polymeren Monomereinheiten der Formel II enthalten, 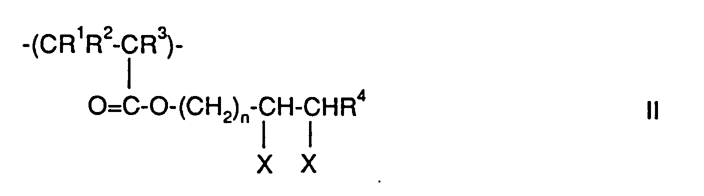 worin
   - R¹, R² und R³: unabhängig voneinander H oder CH₃,
   - R⁴: H, C₁-C₅-Alkyl oder C₆-C₁₂-Aryl,
   - n: eine ganze Zahl zwischen 1 und 5
   und
   einer der Reste X OH und der andere Rest X einen nukleosidhaltigen Rest, beispielsweise einen Nukleosiddiphosphatrest, einen Mono- oder Oligonukleotidrest oder einen Nukleosidrest,
   bedeuten. In besonders bevorzugten Ausführungsformen leitet sich der nukleosidhaltige Rest X von einer der folgenden Verbindungen her: CDP, UDP, GDP, AMP, ADP, ATP, cyclo-AMP.

Gegenstand der Erfindung ist die Verwendung dieser erfindungsgemäßen Trennmaterialien für die Affinitätschromatographie.

Gegenstand der Erfindung sind Verfahren zur Herstellung eines nukleosidhaltigen Sorbens, gekennzeichnet durch folgende Verfahrensschritte:
a) Pfropfpolymerisation von Monomeren der Formel I auf einen hydroxylgruppenhaltigen Basisträger unter Beteiligung von Cer-(IV), 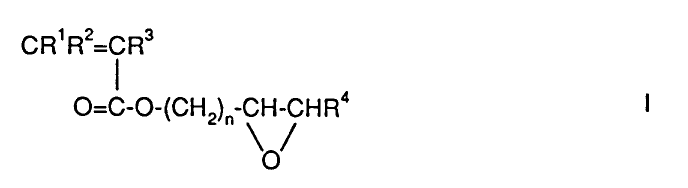 worin
   - R¹, R² und R³: unabhängig voneinander H oder CH₃,
   - R⁴: H, C₁-C₅-Alkyl oder C₆-C₁₂-Aryl
   und
   - n: eine ganze Zahl zwischen 1 und 5
   bedeuten.
b) Umsetzung des epoxidgruppenhaltigen Trägers aus Verfahrensschritt a) mit Phosphorsäure oder einem Alkalisalz der Phosphorsäure oder mit Ammoniak;
c) Einführung von nukleosidhaltigen Resten in das in Schritt b) erhaltene Produkt.

In einer bevorzugten Ausführungsform erfolgf die Umsetzung nach Schritt b) mit Phosphorsäure; anschließend wird der phosphorylierte Träger durch Zugabe eines Überschusses eines tertiären Alkylamins oder von Pyridin in ein alkyliertes Ammoniumsalz überführt. Dieses wird unter wasserabspaltenden Bedinungen mit einem Nukleotid oder Oligonukleotid umgesetzt.

In einer weiteren Ausführungsform erfolgt die Umsetzung nach Schritt b) mit Ammoniak. Anschließend wird der Nukleosidrest beispielsweise als 6-Chlorpurinribosid eingeführt. Das so erhaltene Purinderivat kann nach an sich bekannten Methoden beispielsweise zu einem trägergebundenen AMP-, ATP- oder cyclischen AMP-Derivat umgesetzt werden. Auch sind analoge Umsetzungen zu anderen nukleosidhaltigen Verbindungen bekannt.

Gegenstand der Erfindung sind weiterhin Phosphorsäureesterderivate eines gepfropften Polymeren auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalentgebundenen Polymeren über eine endständige Monomereinheit an den Basisträger gebunden sind,
c) die linearen Polymeren Monomereinheiten der Formel III enthalten, 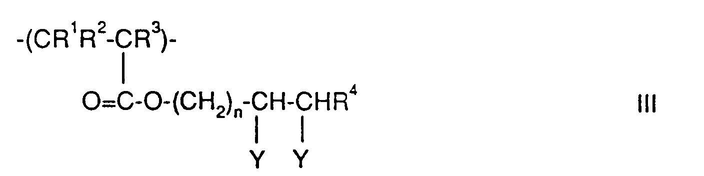 worin
   - R¹, R² und R³: unabhängig voneinander H oder CH₃,
   - R⁴: H, C₁-C₅-Alkyl oder C₆-C₁₂-Aryl,
   - n: eine ganze Zahl zwischen 1 und 5
   und
   einer der Reste Y OH und der andere Rest Y PO₄H₂
   bedeuten.

Gegenstand der Erfindung ist schließlich die Verwendung eines erfindungsgemäßen Phosphorsäureesterderivafes eines gepfropften Polymeren für die Herstellung eines erfindungsgemäßen Sorbens für die Affinitätschromatographie und als Kationenaustauscher für die Flüssigkeitschromatographie.

In dem ersten Verfahrensschritt entsteht entweder durch Reaktion von Phosphorsäure oder deren Salzen mit Epoxidgruppen der in DE 43 10 964 beschriebenen aktivierten Trägermaterialien Phosphorsäuremonoesterderivate dieser Trägermaterialien. oder es werden die Epoxidgruppen mit Ammoniak zum Hydroxyaminderivat umgesetzt. Entsprechend dem Gehalt an Oxiranresten der aktivierten Trägermaterialien und durch Wahl der Reaktionsbedingungen (Menge an Phosphorsäure/Phosphat; Reaktionsdauer und -temperatur) läßt sich der Substitutionsgrad des Phosphorsäuremonoesterderivates des Trägermaterials einstellen. In ähnlicher Weise kann der Substitutionsgrad bei der Umsetzung mit Ammoniak variiert werden. Eventuell vorhandene Überschüsse an Oxirangruppen werden nach üblichen Methoden, z.B. durch Reaktion mit Mercaptoglycerin oder durch Behandlung mit verdünnter Schwefelsäure entfernt.

Die nach diesem Verfahren hergestellten Phosphorsäuremonoesterderivate des Trägermaterials können auch als Kationenaustauscher verwendet werden.

In der Biochemie werden unter dem Begriff Nukleoside N-Glycoside der Pyrimidinbasen Thymin, Uracil und Cytosin und der Purinbasen Guanin und Adenin mit Ribose oder 2-Desoxyribose verstanden. Nukleotide sind die Phosphorsäureester dieser Nukleoside. Nukleosiddiphosphate enthalten ein weiteren Phosphorsäurerest, der durch eine Pyrophosphatbindung an den ersten Phosphorsäurerest gebunden ist. Oligonukleotide enthalten mehrere Nukleotide, die gleich oder verschieden sein können, und die durch Phosphorsäurediesterbindungen verknüpft sind. Erfindungsgemäß werden unter den Begriffen Nukleosid, Nukleotid und Oligonukleotid außerdem Verbindungen verstanden, bei denen statt der genannten Basen andere Purin- oder Pyrimidinbasen, wie z.B. Hypoxanthin, 5-Methylcytosin oder N-2-Methylguanosin enthalten sind, oder die statt der Ribose oder 2-Desoxyribose einen anderen Zuckerrest oder einen Zuckeralkohol wie Ribit enthalten. Derartige analoge Verbindungen sind dem Fachmann bekannt. In ihrer Gesamtheit werden diese Verbindungen erfindungsgemäß unter dem Begriff nukleosidhaltige Verbindungen beziehungsweise Reste zusammengefaßt. Beispiele solcher nukleosidhaltigen Verbindungen sind Adenosin, AMP, ADP, ATP, cyclo-AMP, CDP, UDP, GDP, NAD(H), NADP(H), FMN oder FAD.

Esterbindungen entstehen aus einer Säure und einem Alkohol durch Wasserabspaltung; entsprechend entstehen Pyrophosphatbindungen aus zwei Phosphorsäureverbindungen. Zu den gebräuchlichen wasserabspaltenden Mitteln gehören beispielsweise die Carbodiimide, beispielsweise Dicyclohexylcarbodiimid. Bevorzugterweise wird 1,1'-Carbonyldiimidazol für diesen Zweck benutzt. Bei anderen Verfahren der Wasserabspaltung werden aktivierte Zwischenstufen, wie z.B. Säurehalogenide oder -anhydride, eingesetzt. Die Einzelheiten derartiger Verfahren und geeignete Verfahrensvarianten sind dem Fachmann beispielsweise aus gängigen Handbüchern bekannt. Für die Bildung von Pyrophosphatverbindungen zwischen dem Phosphorsäureesterderivat, das Monomereinheiten nach Formel III enthält, und den Nukleotiden wird die Methode nach Michelson (1964) Biochim. Biophys.Acta 91, 1 ff, bevorzugt. Bei diesem Verfahren werden die Phosphorsäureester mit tertiären Aminen oder mit quaternären Ammoniumhydroxid in die entsprechenden primären Salze umgesetzt. Bevorzugt ist dabei die Verwendung von Tri-n-butylamin oder Methyltri-n-octylammoniumhydroxid.

Weitere Synthesen zur Herstellung von Nukleosidderivaten sind dem Fachmann bekannt; diese können in geeigneter Weise auf die Umsetzung mit den aus DE 43 10 964 bekannten aktivierten Trägermaterialien angewandt werden, wobei die Phosphorsäure- oder Aminoderivate dieser Träger als bevorzugte Zwischenprodukte dienen. Zu derartigen Umsetzungen gehört die Alkylierung des Aminoderivates mit 6-Chloropurinribosid, 2*'*,3*'*-Isopropyliden-6-chloropurinribosid oder 6-Chlor-AMP. Im letzteren Fall wird direkt das trägergebundene AMP-Derivat erhalten. Die ungeschützte Ribosidverbindung kann anschließend nach Yoshikawa, M. Yoshikawa et al. Tetrahedron Lett. (1967) 1967, 5065; M. Yoshikawa und T. Kato (1967) Bull. Chem. Soc. Jpn. 40, 2849; K. Kusashio und M. Yoshikawa (1968) Bull. Chem. Soc. Jpn. 41, 142; M. Yoshikawa et al. (1969) Bull. Chem. Soc. Jpn. 42, 3505, phosphoryliert werden. Die Schutzgruppe des 2*'*,3*'*-Isopropylidenderivates kann nach der 5*'*-Tosylierung abgespalten werden. In allen Fällen können anschließend nach gängigen Methoden der Nukleosidchemie die weiteren Derivatisierungen ausgeführt werden. Dazu gehören die ATP-Synthese nach J. Ludwig (1981) Acta Biochim. Biophys. Acad. Sci. Hung. **16**, 131-133) oder auch die Bildung von Pyrophosphaten oder Triphosphat aus dem AMP-Derivat mittels wasserabspaltender Mittel wie z.B. Dicyclohexylcarbodiimid oder Carbonyldiimidazol. Ebenso lassen sich cyclische Phosphatderivate wie cyclo-AMP-Derivate herstellen. Als Beispiel für weitere Literaturhinweise sei H. Guilford et al. (1972) Chemica Scripta **2**, 165-170 genannt.

Auch ohne weitere Ausführungen wird davon ausgegangen, daß ein Fachmann die obige Beschreibung in weitesten Umfang nutzen kann. Die bevorzugten Ausführungsformen sind deswegen lediglich als beschreibende, keineswegs als in irgendeine Weise limitierende Offenbarung aufzufassen.

Die folgenden Beispiele sollen den Gegenstand näher erläutern; diese Beispiele stellen keine Einschränkung des Erfindungsgegenstandes dar.

### Beispiele

### Beispiel 1: Herstellung eines oxiran-aktivierten Trägers ausgehend von Fractogel®-TSK HW 65 (S)

Zu einer Suspension aus 50 ml sedimentiertem Fractogel®-TSK HW 65 (S) und 25 ml Wasser werden mit 2 g Ammoniumcer(IV)nitrat (gelöst in 25 ml 2 M HNO₃) bei RT unter starkem Rühren vermischt. Nach 1 Minute erfolgt die Zugabe einer Lösung von 3 g (2,3-Epoxypropyl)-methacrylat in 30 ml Dioxan. Es wird 3 Stunden weitergerührt. Anschließend wird die Reaktionssuspension erst mit destilliertem Wasser und dann mit 0.05 M EDTA-Lösung gewaschen.

### Beispiel 2: Synthese eines phosphatgruppenhaltigen Trägermaterials

5 g getrocknete Gel hergestellt nach Beispiel 1 werden in 20 ml Wasser suspendiert und mit 8 ml Phosphorsäure (85 %) versetzt. Die Suspension wird unter Schütteln 3 bis 4 Stunden bei Raumtemperatur weiter geschüttelt. Das Reaktionsprodukt wird mit einer Glasfritte (G3) abfiltriert und mit Wasser neutral gewaschen.

Anschließend wird das Reaktionsprodukt mit 1 ml Mercaptoglycerin in 0,1 M Natriumphosphatpuffer pH 7,5 unter Schütteln behandelt (3 Tage, Raumtemperatur), damit nicht umgesetzte Oxirangruppen entfernt werden.

Das phosphatgruppenhaltige Trägermaterial wird nochmals gründlich mit Wasser gewaschen. Es enthält 30 µmol Phosphat/g Trägermaterial.

### Beispiel 3: Synthese eines phosphatgruppenhaltigen Trägermaterials mit höherer Phosphatbelegung

5 g getrocknete Gel hergestellt nach Beispiel 1 werden wie in Beispiel 2 beschrieben umgesetzt, jedoch erfolgt die Reaktion mit der Phosphorsäure 15 Stunden. Das resultierende phosphatgruppenhaltige Trägermaterial enthält 40 µmol Phosphat/g Trägermaterial.

### Beispiel 4: Synthese eines mit Cytidin-5'-diphosphat (CDP) derivatisierten Trägermaterials

### Stufe 1: Tri-n-butylammoniumsalz des derivatisierten Trägermaterials

Das feuchte Reaktionsprodukt aus Beispiel 2 wird in 30 ml Wasser suspendiert, mit 0,5 ml Tri-n-butylamin versetzt und 1 Stunde bei Raumtemperatur geschüttelt. Anschließend wird über eine Glasfritte (G2) filtriert und dreimal mit 50 ml Aceton gewaschen. Der feste Rückstand wird in einem 250-ml-Rundkolben bei 50 °C über Nacht unter Vakuum (5-7 Torr) getrocknet.

### Stufe 2: Methyl-tri-octylammoniumsalz des CMP

4,2 g Methyl-tri-octylammoniumchlorid werden in 100 ml Methanol gelöst und über eine Säule (DOWEX® 1X2, 200-400 mesh; OH-Form) in die quaternäre Base überführt. Mit dieser Lösung wird eine Suspension aus 3,23 g CMP in 250 ml Methanol versetzt. Das entstandene Methyl-tri-octylammoniumsalz des CMP wird eingeengt.

### Stufe 3: Diphenylpyrophosphat-aktiviertes CMP

1 mMol des Methyl-tri-octylammoniumsalzes des CMP aus Stufe 2 werden in einer Mischung aus 7 ml Dioxan und 3 ml N,N-Dimethylformamid gelöst. Unter Feuchtigkeitsausschluß werden zu der Lösung 0,3 ml Diphenylphosphorsäurechlorid und 0,45 ml Tri-n-butylamin zugegeben und 3 Stunden geschüttelt. Anschließend wird das Lösungsmittel in einem Rotationsverdampfer unter Vakuum entfernt und der Rückstand mit 30 ml Diethylether behandelt. Die Suspension wird 1 Stunde auf 0 °C gekühlt und die Etherphase abdekantiert und verworfen. Der Rückstand wird im Vakuum getrocknet und nochmals in 2 ml Dioxan gelöst und erneut im Vakuum getrocknet.

### Stufe 4: Pyrophosphatderivat von CMP und derivatisiertem Trägermaterial

Das derivatisierte Trägermaterial aus Stufe 1 wird in 30 ml Pyridin suspendiert und mit einer Lösung von 0,5 mMol des Diphenylpyrophosphat-aktivierten CMP aus Stufe 3 in 10 ml Pyridin unter Feuchtigkeitsausschluß versetzt und bei Raumtemperatur über Nacht geschüttelt. Das Reaktionsprodukt wird mit einer Glasfritte (G2) abfiltriert und mit 250 ml Methanol, mit 100 ml gesättigter wäßriger Natriumhydrogencarbonatlösung und mit 1000 ml Wasser gewaschen.

Das resultierende Material enthält 25 µMol Cytidin / g Feuchtgewicht (gemessen durch UV-Absorption bei 267 nm nach Hydrolyse (1 N HCl; 2 Stunden bei 110 °C) und anschließender Neutralisation mit 1 N NaOH).

### Beispiel 5: Synthese eines mit Guanosin-5'-diphosphat (GDP) derivatisierten Trägermaterials

### Stufe 1: Tri-n-butylammoniumsalz des derivatisierten Trägermaterials

Die Durchführung dieser Stufe ist identisch mit der Stufe 1 aus Beispiel 4.

### Stufe 2: Tri-n-butylammoniumsalz des GMP

3 g GMP (freie Säure) und 1,1 g Tri-n-butylamin werden in 250 ml Methanol erwärmt, bis die Lösung klar ist; anschließend wird die Lösung zur Trockene eingeengt.

### Stufe 3: Diphenylpyrophosphat-aktiviertes GMP

1 mMol des Tri-n-butylammoniumsalz des GMP aus Stufe 2 werden in einer Mischung aus 7 ml Dioxan und 3 ml N,N-Dimethylformamid gelöst. Unter Feuchtigkeitsausschluß werden zu der Lösung 0,3 ml Diphenylphosphorsäurechlorid und 0,45 ml Tri-n-butylamin zugegeben und 3 Stunden geschüttelt. Anschließend wird das Lösungsmittel in einem Rotationsverdampfer unter Vakuum entfernt und der Rückstand mit 30 ml Diethylether behandelt. Die Suspension wird 1 Stunde auf 0 °C gekühlt und die Etherphase abdekantiert und verworfen. Der Rückstand wird im Vakuum getrocknet und nochmals in 2 ml Dioxan gelöst und erneut im Vakuum getrocknet.

### Stufe 4: Pyrophosphatderivat von GMP und derivatisiertem Trägermaterial

Das derivatisierte Trägermaterial aus Stufe 1 wird in 30 ml Pyridin suspendiert und mit einer Lösung von 0,5 mMol des Diphenylpyrophosphat-aktivierten GMP aus Stufe 3 in 10 ml Pyridin unter Feuchtigkeitsausschluß versetzt und bei Raumtemperatur über Nacht geschüttelt. Das Reaktionsprodukt wird mit einer Glasfritte (G2) abfiltriert und mit 250 ml Methanol, mit 100 ml gesättigter wäßriger Natriumhydrogencarbonatlösung und mit 1000 ml Wasser gewaschen.

Das resultierende Material enthält 30 µMol Guanosin / g Feuchtgewicht (gemessen durch UV-Absorption bei 270 nm nach Hydrolyse (1 N HCl; 2 Stunden bei 110 °C) und anschließender Neutralisation mit 1 N NaOH).

### Beispiel 6: Synthese eines aminogruppenhaltigen Trägermaterials

35 g getrocknete Gel hergestellt nach Beispiel 1 werden in 200 ml konzentrierter wäßriger Ammoniaklösung 5 Tage bei Raumtemperatur geschüttelt. Dabei kann der Fortgang der Reaktion folgendermaßen überprüft werden: Eine trockene Probe des Reaktionsansatzes wird mit Pyridin aufgekocht. Solange noch Epoxidgruppen vorhanden sind, färbt sich der Träger braun bis gelb. Nach vollständiger Umsetzung bleibt der Träger farblos.
Anschließend wird das Reaktionsprodukt auf einer G3-Fritte abgesaugt und mit Methanol und Aceton gewaschen. Das Reaktionsprodukt wird im Vakuum (10 - 15 mbar) bei 60 - 70 °C getrocknet.
Das Reaktionsprodukt weist einen Stickstoffgehalt von 1,3 % auf. Beim Erwärmen mit einer ethanolischen Ninhydrinlösung färbt sich der Träger violett.

### Beispiel 7: Synthese eines purinribosidhaltigen Trägermaterials

36 g des Aminoderivates hergestellt nach Beispiel 6 werden in 150 ml absolutem Ethanol suspendiert und mit 3,6 g 6-Chlor-purinribosid und 3,6 ml Triethylamin 15 Stunden unter Rückfluß erhitzt.
Anschließend wird das Reaktionsprodukt auf einer G3-Fritte abgesaugt und mit Methanol und Aceton gewaschen. Das Reaktionsprodukt wird in einen Rundkolben überführt und im Vakuum (10 - 15 mbar) bei 60 - 70 °C getrocknet.

Die Kopplungsrate beträgt ca. 97 %.

### Beispiel 8: Synthese eines AMP-haltigen Trägermaterials (Phosphorylierung nach Yoshikawa)

Das Produkt aus Beispiel 7 wird mit 125 ml wasserfreiem Triethylphosphat versetzt und unter Rühren bei 0 °C mit 1,8 ml frisch destilliertem Phosphoroxychlorid versetzt. Man rührt 3 Stunden bei 0 °C und anschließend eine Stunde bei 4 °C. Anschließend wird überschüssiges Phosphoroxychlorid im Vakuum (10 - 15 mbar) abdestilliert.

Zur Herstellung des AMP-Derivates wird die Reaktionssuspension anschließend langsam unter Rühren bei 10 °C in 500 ml einer wäßrigen Natriumhydrogencarbonatlösung (50 g/l) gegossen. Dabei fällt der pH-Wert von 7.8 auf 7.2. Nach 30 Minuten wird über eine G3-Fritte abgesaugt und mit Wasser gewaschen. Aus dem Natriumsalz erhält man durch Behandlung mit 0,1 N wäßriger HCl auf der Fritte die freie Säure (AMP-Derivat des Trägers), das auf der Fritte mit Wasser, Methanol und Aceton gewaschen und bei 70 °C im Vakuum (10 - 15 mbar) getrocknet wird.

### Beispiel 9: Synthese eines cyclo-AMP-haltigen Trägermaterials

Das trockene Produkt aus Beispiel 8 wird in einer Apparatur mit Rührer und Rückflußkühler in 150 ml wasserfreiem Pyridin suspendiert und mit 5,4 g Dicyclohexylcarbodiimid versetzt. Es wird 4 Stunden unter Rückfluß erhitzt. Anschließend wird das Produkt auf einer G3-Fritte abgesaugt und mit Dichlormethan, Methanol, heißem Methanol (zum Herauslösen des Dicyclohexylharnstoffs), Wasser, gesättigter wäßriger Natriumhydrogencarbonatlösung, 1 M wäßriger Kaliumdihydrogenphosphatlösung (pH 4), und Wasser gewaschen. Das feuchte Gel wird in 20%igem (v/v) wäßrigen Ethanol unter Zusatz von 0,1 M NaCl gelagert.

### Beispiel 10: Synthese eines ATP-haltigen Trägermaterials (ATP-Synthese nach J. Ludwig (1981) Acta Biochim. Biophys. Acad. Sci. Hung. 16, 131-133)

Das Produkt aus Beispiel 8 (Chlorderivat, d.h. vor der Hydrolyse) wird mit dem tri-n-Butylammoniumsalz der Pyrophosphorsäure umgesetzt.

Eine Mischung von 0,5 M bis-tri-n-Butylammoniumsalz der Pyrophosphorsäure in wasserfreiem DMF und tri-n-Butylamin wird unter Schütteln zugegeben. Nach 5 Min. kräftigem Schütteln wird die Suspension mit 1 M Triethylammoniumhydrogencarbonatpuffer (pH 7,5) hydrolysiert und nach 0,5 Std. über eine G3-Fritte abgesaugt und mit Wasser, ges. Natriumhydrogencarbonatlösung und Wasser gewaschen.

Die Ausbeute an ATP liegt bei ∼60 % (P-Analyse).

### Anwendungsbeispiel A: Trennung von Sialyltransferase aus Rindercolostrum

Eine Superformance® Säule (I.D. 1,6 cm) wird mit 10 g CDP-haltigem Trägermaterial nach Beispiel 4 gefüllt und mit 10 mM MES-Puffer pH 6.8, der 25 % Glycerin enthält, equilibriert. Rindercolostrum vom 1. Tag nach der Geburt wird durch Zentrifugation entfettet und gegen denselben Puffer ausgiebig dialysiert. Ca. 1 l dialysiertes Colostrum wird mit einem Fluß von 1 ml/min aufgetragen. Elution erfolgt mit einem Stufengradienten von 1,0 M NaCl.

Die Aktivität der Sialyltransferase wird durch Übertragung von CMP-[¹⁴C]-Sialinsäure auf Lactose bestimmt. Dazu werden 50 µl Enzymprobe mit 30 µl MES-Puffer (Endkonzentration: 50 mM MES, 10 mM MnCl 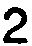 , pH 6,8), 10 µl 0,8 M Lactose und 10 µl CMP-[¹⁴C]-Sialinsäure (0,05 µCi) für 15 min bei 37 °C inkubiert. Der Reaktionsansatz wird mit 1 ml eiskaltem 5 mM Kaliumphosphat-Puffer pH 7,0 abgestoppt und über eine 1-ml-Säule mit

Dowex 1X8-200 chromatographiert. CMP-[¹⁴C]-Sialinsäure wird unter diesen Bedingungen auf der Säule retardiert, während das Produkt [¹⁴C]-Sial-Lactose in der nicht-bindenden Fraktion isoliert werden kann.

1 Unit Sialyltransferase-Aktivität wird definiert als Übertragung von 1 µmol [¹⁴C]-Sialinsäure / min. Es werden 0,2 U Sialyltransferase pro g Trägermaterial gebunden. Diese Bindungskapazität liegt um 50 % über der eines Vergleichsmaterials (CDP gekoppelt an BrCN-Sepharose). Die gebundene Aktivität konnte mit einer Ausbeute von 75 % mit 1,0 M NaCl eluiert werden, während das Vergleichsmaterial nur eine Wiederfindungsrate von maximal 8 % aufwies (Elution mit 2,0 M NaCl).

### Anwendungsbeispiel B: Trennung von 1-3/4-Fucosyltransferase aus Humanmilch

1000 ml Humanmilch werden durch Zentrifugation entfettet und ausgiebig bei 4 °C gegen 10 mM Na-Cacodylat, 10 mM MgCl₂, 20 % Glycerin pH 6,8 dialysiert. Die Vorreinigung der Transferase erfolgt nach einer beschriebenen Methode (Eppenberger-Castori et al., Glycoconjugate J., 6, p 101-114, 1990) durch Chromatographie an Fractogel® SO₃ (Fa. E. Merck).

Die Bestimmung der Fucosyltransferase-Aktivität wird analog zum Beispiel 6 mit GDP-[¹⁴C]-Fucose als Substrat durchgeführt.

Aktive Fraktionen aus der SO₃-Chromatographie werden durch Dialyse entsalzt und affinitätschromatographisch an GDP-Trägermaterial nach Beispiel 5 gereinigt. Dazu wird eine Superformance® Säule (I.D. 1,0 cm) mit 2 ml Trägermaterial gefüllt und mit 10 mM Na-Cacodylat, 10 mM MgCl₂, 20 % Glycerin pH 6,8 equilibriert (0,5 ml/min). Nach Probenauftrag wird ausgiebig mit Equilibrierungspuffer gewaschen und mit einem NaCl-Gradienten (0-1,5 M NaCl, 20 Säulenvolumina, 0,2 ml/min) eluiert.

Die Ausbeute beträgt ca. 83 % bei einer ungefähr 450fachen Anreicherung. Die Fucosyltransferase ist als dominante Bande in der SDS-Gelelektrophorese zu sehen (MW 47 kD).

## Patentansprüche

1. Trennmaterialien für die Affinitätschromatographie auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalentgebundenen Polymeren über eine endständige Monomereinheit an den Basisträger gebunden sind,
c) die linearen Polymeren Monomereinheiten der Formel II enthalten, 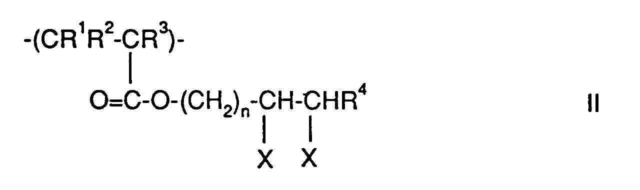 worin
R¹, R² und R³ unabhängig voneinander H oder CH₃,
R⁴ H, C₁-C₅-Alkyl oder C₆-C₁₂-Aryl,
n eine ganze Zahl zwischen 1 und 5
und
einer der Reste X OH und der andere Rest X einen nukleosidhaltigen Rest
bedeuten.

2. Trennmaterial nach Anspruch 1, dadurch gekennzeichnet, daß der nukleosidhaltige Rest X einen Rest nach Formel IV bedeutet.

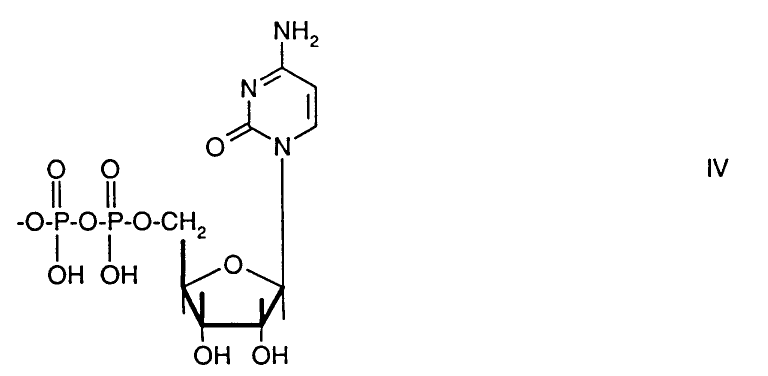

3. Trennmaterial nach Anspruch 1, dadurch gekennzeichnet, daß der nukleosidhaltige Rest X einen Rest nach Formel V bedeutet.

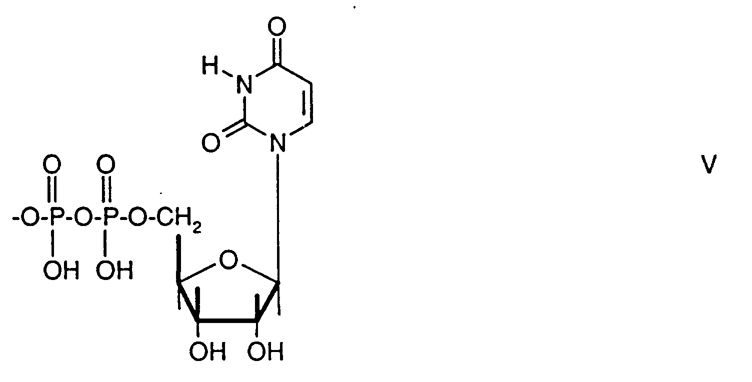

4. Trennmaterial nach Anspruch 1, dadurch gekennzeichnet, daß der nukleosidhaltige Rest X einen Rest nach Formel VI bedeutet.

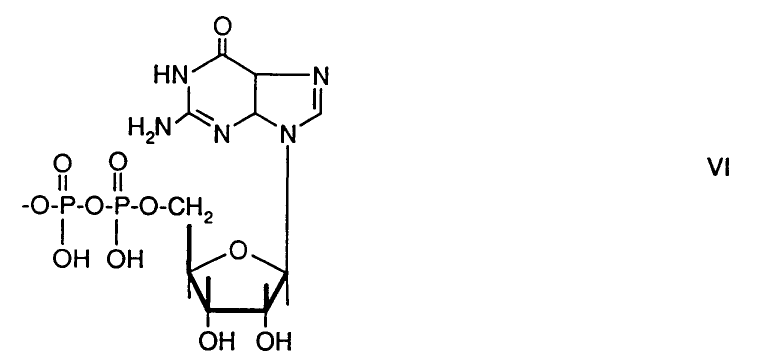

5. Trennmaterial nach Anspruch 1, dadurch gekennzeichnet, daß der nukleosidhaltige Rest X einen Rest nach Formel VII bedeutet, worin m 1, 2 oder 3 bedeutet.

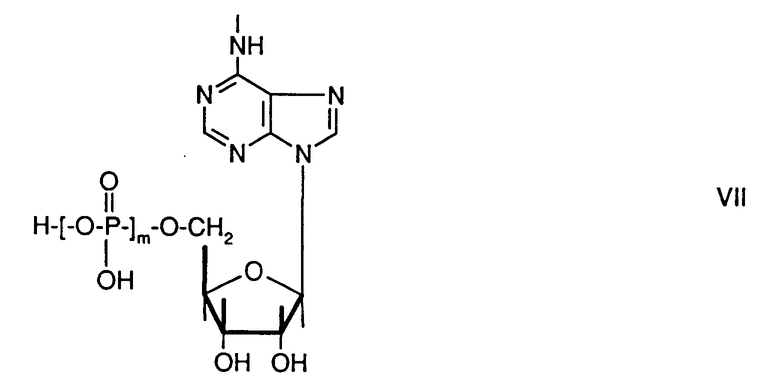

6. Trennmaterial nach Anspruch 1, dadurch gekennzeichnet, daß der nukleosidhaltige Rest X einen Rest nach Formel VIII bedeutet.

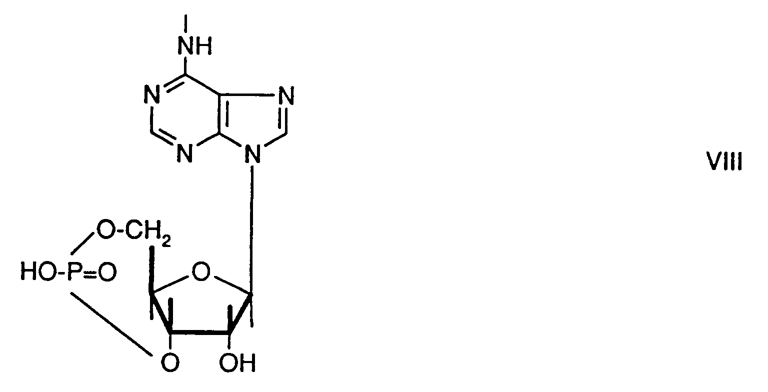

7. Verwendung von Trennmaterialien mit den Merkmalen eines der Ansprüche 1 - 6 für die Affinitätschromatographie.

8. Verfahren zur Herstellung eines Sorbens mit den Merkmalen eines der Ansprüche 1 - 6, gekennzeichnet durch folgende Verfahrensschritte:
a) Pfropfpolymerisation von Monomeren der Formel I auf einen hydroxylgruppenhaltigen Basisträger unter Beteiligung von Cer-(IV)-Ionen, 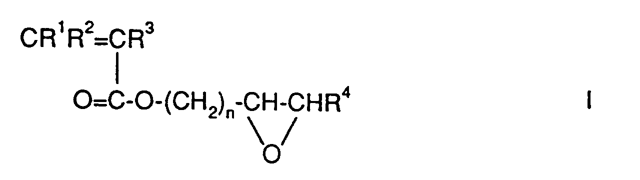 worin
R¹, R² und R³ unabhängig voneinander H oder CH₃,
R⁴ H, C₁-C₅-Alkyl oder C₆-C₁₂-Aryl
und
n eine ganze Zahl zwischen 1 und 5
bedeuten.
b) Umsetzung des epoxidgruppenhaltigen Trägers aus Verfahrensschritt a) mit Phosphorsäure oder einem Alkalisalz der Phosphorsäure oder mit Ammoniak;
c) Einführung von nukleosidhaltigen Resten in das in Schritt b) erhaltene Produkt.

9. Phosphorsäureesterderivat eines gepfropften Polymeren auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalentgebundenen Polymeren über eine endständige Monomereinheit an den Basisträger gebunden sind,
c) die linearen Polymeren Monomereinheiten der Formel III enthalten, 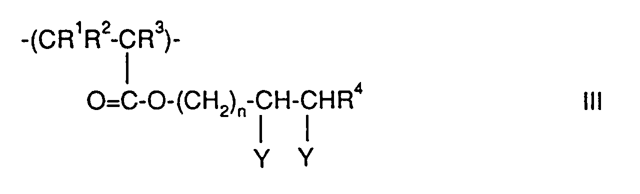 worin
R¹, R² und R³ unabhängig voneinander H oder CH₃,
R⁴ H, C₁-C₅-Alkyl oder C₆-C₁₂-Aryl,
n eine ganze Zahl zwischen 1 und 5
und
einer der Reste Y OH und der andere Rest Y PO₄H₂ bedeuten.

10. Verwendung eines Phosphorsäureesterderivates nach Anspruch 9 für die Herstellung eines Sorbens nach einem der Ansprüche 2, 3 oder 4.

11. Verwendung eines Phosphorsäureesterderivates nach Anspruch 9 als Kationenaustauscher für die Flüssigkeitschromatographie.

## Claims

1. Separation materials for affinity chromatography which are based on hydroxyl-containing base supports on whose surfaces polymers are covalently bonded, characterized in that
a) the base support contains aliphatic hydroxyl groups,
b) the covalently bonded polymers are bound to the base support by a terminal monomer unit,
c) the linear polymers contain monomer units of the formula II 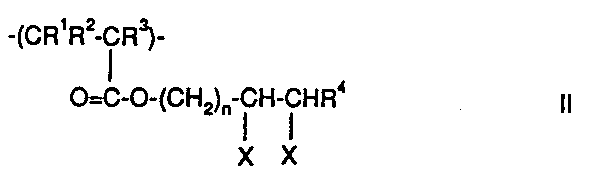 in which
R¹, R² and R³ independently of one another are H or CH₃,
R⁴ is H, C₁-C₅-alkyl or C₆-C₁₂-aryl,
n is an integer between 1 and 5
and
one of the radicals X is OH and the other radical X is a nucleoside-containing radical.

2. Separation material according to claim 1, characterized in that the nucleoside-containing radical X is a radical of formula IV.

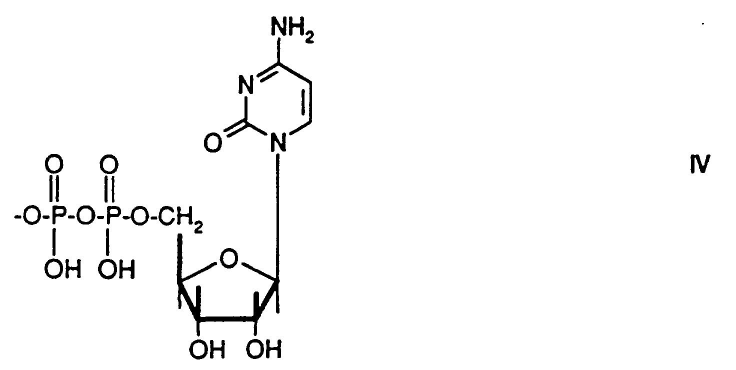

3. Separation material according to claim 1, characterized in that the nucleoside-containing radical X is a radical of formula V.

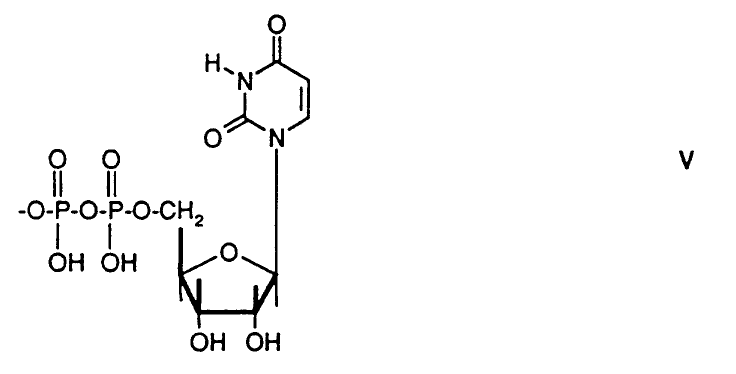

4. Separation material according to claim 1, characterized in that the nucleoside-containing radical X is a radical of formula VI.

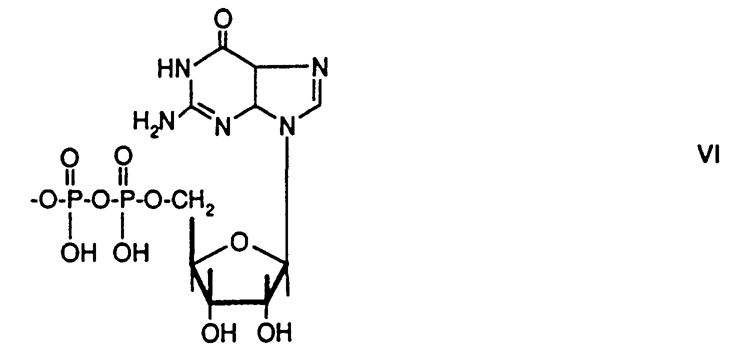

5. Separation material according to claim 1, characterized in that the nucleoside-containing radical X is a radical of formula VII in which m is 1, 2 or 3.

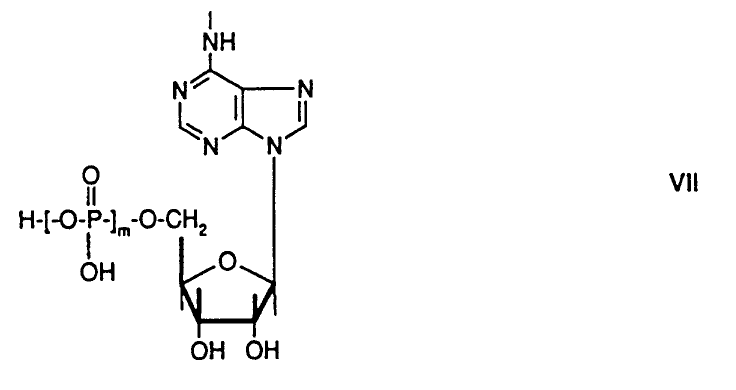

6. Separation material according to claim 1, characterized in that the nucleoside-containing radical X is a radical of formula VIII.

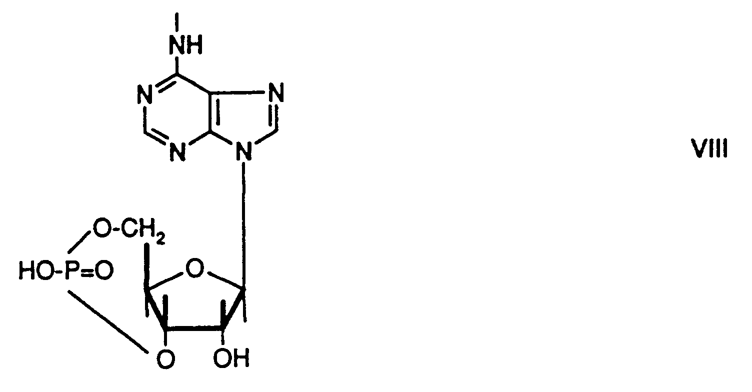

7. Use of separation materials having the features of one of claims 1-6 for affinity chromatography.

8. Process for the preparation of a sorbent having the features of one of claims 1-6, characterized by the following process steps:
a) graft polymerization of monomers of the formula I onto a hydroxyl-containing base support, with the participation of cerium(IV) ions, 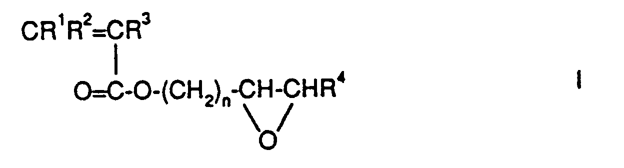 in which
R¹, R² and R³ independently of one another are H or CH₃,
R⁴ is H, C₁-C₅-alkyl or C₆-C₁₂-aryl
and
n is an integer between 1 and 5;
b) reaction of the epoxide group-containing support from process step a) with phosphoric acid or with an alkali metal salt of phosphoric acid or with ammonia; and
c) introduction of nucleoside-containing radicals into the product obtained in step b).

9. Phosphoric acid ester derivative of a grafted polymer on the basis of hydroxyl-containing base supports on whose surfaces polymers are covalently bonded, characterized in that
a) the base support contains aliphatic hydroxyl groups,
b) the covalently bonded polymers are attached to the base support by a terminal monomer unit,
c) the linear polymers contain monomer units of the formula III 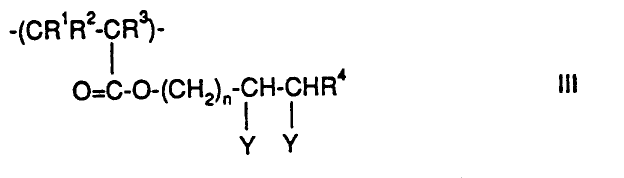 in which
R¹, R² and R³ independently of one another are H or CH₃,
R⁴ is H, C₁-C₅-alkyl or C₆-C₁₂-aryl,
n is an integer between 1 and 5
and
one of the radicals Y is OH and the other radical Y is PO₄H₂.

10. Use of a phosphoric acid ester derivative according to claim 9 for the preparation of a sorbent according to one of claims 2, 3 and 4.

11. Use of a phosphoric acid ester derivative according to claim 9 as a cation exchanger for liquid chromatography.

## Revendications

1. Matériaux séparateurs pour la chromatographie d'affinité, à base de supports de base contenant des groupes hydroxyle, sur la surface desquels des polymères sont liés par liaison covalente, caractérisés en ce que
a) le support de base contient des groupes hydroxyle aliphatiques,
b) les polymères liés par liaison covalente sont liés au support de base par l'intermédiaire d'un motif monomère terminal,
c) les polymères linéaires contiennent des motifs monomères de formule II 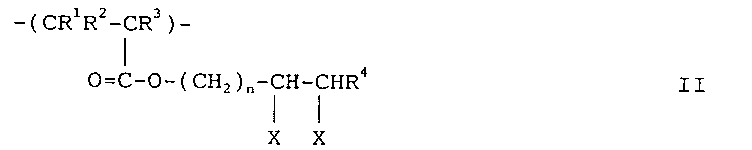 dans laquelle
R¹, R² et R³ sont chacun indépendamment les uns des autres H ou CH₃,
R⁴ est H ou un groupe alkyle en C₁-C₅ ou aryle en C₆-C₁₂,
n est un nombre enetier de 1 à 4,
et
l'un des radicaux X est OH et l'autre radical X est un radical contenant un nucléoside.

2. Matériau support selon la revendication 1, caractérisé en ce que le radical X contenant un nucléoside est un radical de formule IV.

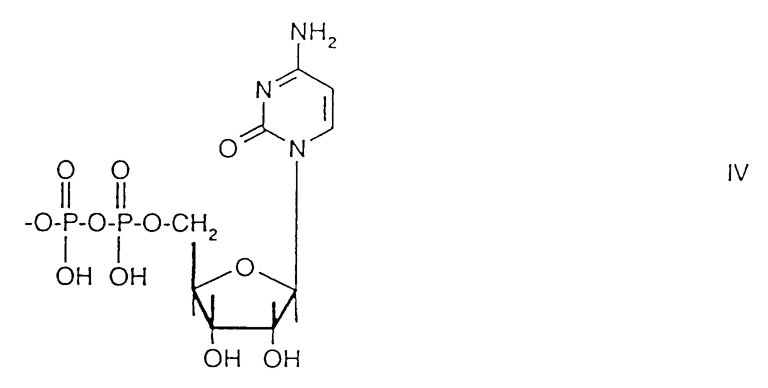

3. Matériau support contenant la revendication 1, caractérisé en ce que le radical X contenant un nucléoside est un radical de formule V.

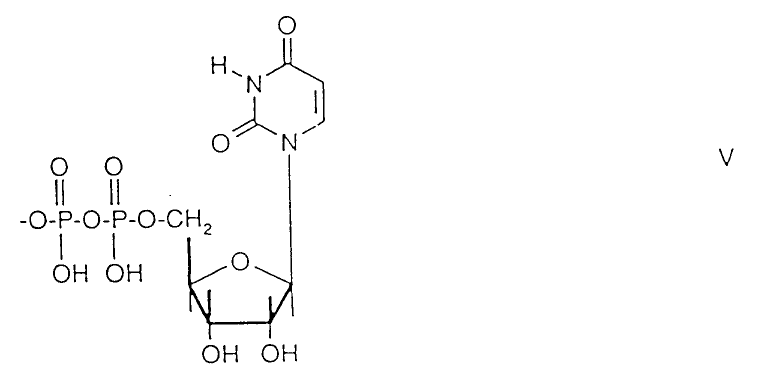

4. Matériau support contenant la revendication 1, caractérisé en ce que le radical X contenant un nucléoside est un radical de formule VI.

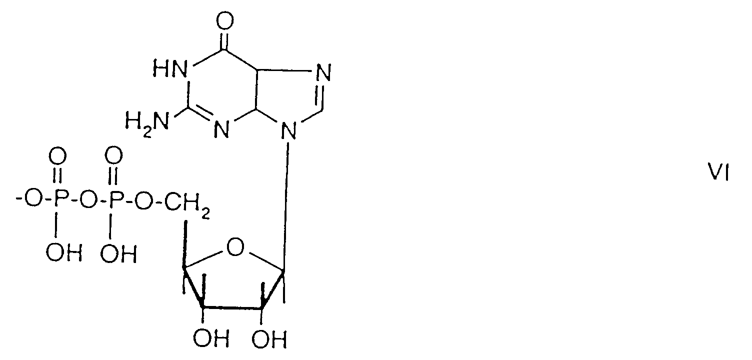

5. Matériau support contenant la revendication 1, caractérisé en ce que le radical X contenant un nucléoside est un radical de formule VII, où m vaut 1, 2 ou 3.

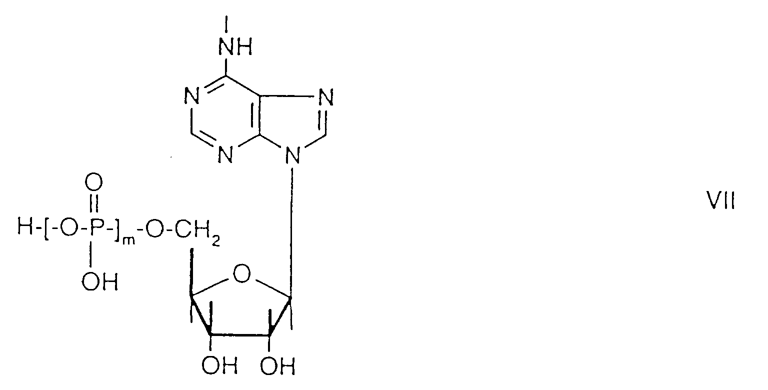

6. Matériau support contenant la revendication 1, caractérisé en ce que le radical X contenant un nucléoside est un radical de formule VIII.

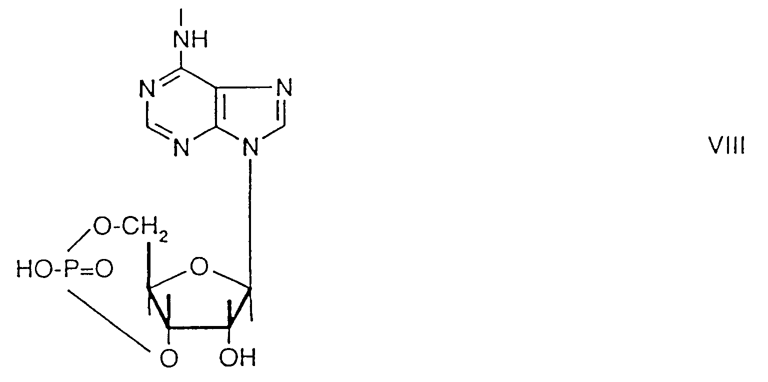

7. Utilisation de matériaux supports présentant les caractéristiques de l'une des revendications 1 à 6 pour la chromatographie d'affinité.

8. Procédé pour préparer un sorbant présentant les caractéristiques de l'une des revendications 1 à 6, caractérisé par les étapes suivantes :
a) Polymérisation par greffage de monomères de formule I sur un support de base comprenant des groupes hydroxyle, avec participation d'ions de cérium(IV), 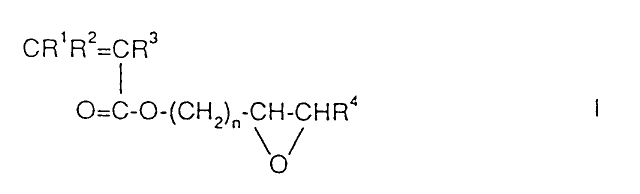 où
R¹, R² et R³ sont chacun indépendamment les uns des autres H ou CH₃,
R⁴ est H ou un groupe alkyle en C₁-C₅ ou aryle en C₆-C₁₂, et
n est un nombre entier de 1 à 4,
b) Réaction du support contenant des groupes époxy provenant de l'étape a) avec de l'acide phosphorique ou un sel d'un métal alcalin de l'acide phosphorique, ou avec l'ammoniac ;
c) Introduction de radicaux contenant un nucléoside dans le produit obtenu dans l'étape b).

9. Dérivé ester de l'acide phosphorique d'un polymère greffé à base de supports de base contenant des groupes hydroxyle, sur la surface desquels les polymères sont liés par liaison covalente, caractérisé en ce que
a) le support de base contient des groupes hydroxyle aliphatiques,
b) les polymères liés par liaison covalente sont liés au support de base par l'intermédiaire d'un motif monomère terminal,
c) les polymères linéaires contiennent des motifs monomères de formule II 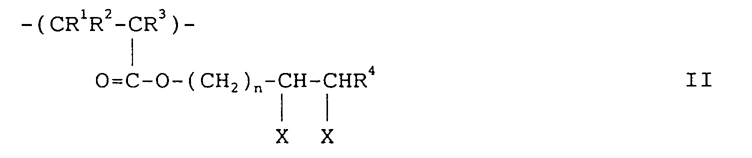 dans laquelle
R¹, R² et R³ sont chacun indépendamment les uns des autres H ou CH₃,
R⁴ est H ou un groupe alkyle en C₁-C₅ ou aryle en C₆-C₁₂,
n est un nombre enetier de 1 à 4,
et
l'un des radicaux Y est OH et l'autre radical Y est PO₄H₂.

10. Utilisation d'un dérivé ester de l'acide phosphorique selon la revendication 9 pour préparer un sorbant selon l'une des revendications 2, 3 ou 4.

11. Utilisation d'un dérivé ester de l'acide phosphorique selon la revendication 9 en tant qu'échangeur de cations pour la chromatographie en phase liquide.
